# EUROPEAN PATENT SPECIFICATION

(11) **EP 1 988 614 B1**
(45) Date of publication and mention of the grant of the patent: **22.06.2011**
(21) Application number: 08154825.7
(22) Date of filing: 18.04.2008
(51) Int. Cl.: H02G 3/12

(54) **Box for electric wirings provided with clamping provision**
Verkabelungsdose mit Klemmhalterung
Boîtier pour câblages électriques avec dispositif de maintien

(30) Priority: 25.04.2007 NL 1033747
(43) Date of publication of application: 05.11.2008
(73) Proprietor: ABB B.V., 6716 AA Ede (NL)
(72) Inventor: Witte, Adriaan Marinus, 3436 HT, Nieuwegein (NL)
(74) Representative: De Hoop, Eric

(56) References cited:
- EP-A- 1 675 238
- DE-U1- 29 519 010
- NL-C2- 1 019 049

## Description

### BACKGROUND OF THE INVENTION

The invention relates to a box for electric wirings in (ceiling) floors.

An example of such a box is a distribution junction box provided with a cavity, which box at an end situated below once having been placed, forms a large opening for access for installation activities from the lower side of the floor, such as arranging wire connections in the cavity, and which is provided with a number of spouts which once having been placed are accessible from the upper side of the floor for connection of one or more installation pipes intended for passing the wires through to the cavity.

At the edge the large opening is usually provided with metal nut members for bolts for attaching electric components.

Such distribution junction boxes are usually placed in concrete floors. They may consist of prefab elements, such as in particular so-called hollow core slabs.

In case of prefabrication the distribution junction box can be placed in the hollow core slab, to which end a hole is left open in the concrete when the concrete is still soft and the box is placed in said hole. The space between the hole and the box is subsequently filled with concrete. Alternatively the box is not placed in the construction project until after the hollow core slab has been placed, to which end the electrician has a hole drilled at the wanted location. After the box has been placed in the hole, the hole, if so desired can be buttered/filled with mortar when the hole is very wide. In other cases the box can be clamped in the hole by clamping ribs on the box. In a later operational step, after the desired pipes have been laid out on the upper surface of the floor, a covering layer of concrete will be poured onto the said floor, optionally after a ball of glasswool has been placed on the box.

For attaching the distribution junction box in the hole, the outside of the circumferential wall of the distribution junction box can be provided with axially and radially running deformable partitions and with radial flanges.

The components to be accommodated in a distribution junction box are often intended for lighting. As a result of the heat emission of the fixture of the lighting, the synthetic material of the box will expand. After switching off the light the material will shrink again when cooling off. This movement of the box material may result in the box getting detached from the surrounding mortar. In the end the box, particularly when the suspended lighting is of great weight (for instance a chandelier), can move downward in the hole and even get detached, causing danger and damage. A reliable engagement between box and hole therefore is desirable.

### SUMMARY OF THE INVENTION

It is an object of the invention to provide a box for electric wirings, particularly a distribution junction box, with which a proper engagement can be achieved with the hole in the floor or wall.

It is an object of the invention to provide a box for electric wirings, particularly a distribution junction box, which can easily and reliably be placed in the hole in the floor or wall.

To achieve at least one of these objects the invention provides a box for electric wirings, particularly a distribution junction box, having a circumferential wall defining a cavity for electric connections that is provided with a centre line, having a lower opening giving access to the cavity, and at least one elongated securing strip arranged on the circumferential wall and projecting outward therefrom, wherein the securing strip at the side of the circumferential wall has an elongated base with which the securing strip merges into the circumferential wall, wherein the elongated base extends with a directional component in circumferential direction of the box and with a directional component in axial direction of the box.

Due to the inclined position of the securing strip a large engagement length with respect to a unit of height of the box can easily be provided.

Preferably the securing strip is designed for elastic bending out of its main plane, in order to further increase the engagement surface.

Inserting the box into a hole is enhanced when the securing strip projects at an acute angle opening downward from the outer surface of the circumferential wall, considered in a plane of axial cross-section containing the centre line. In this way the resistance of the box in the hole against a force directed out of the hole is increased and insertion is facilitated.

Inserting the box in a hole is enhanced when the height of the securing strip with respect to the outer surface of the circumferential wall varies in longitudinal direction of the securing strip. Preferably the height of the securing strip with respect to the outer surface gradually increases in longitudinal direction of the securing strip, preferably in a downward direction.

In one embodiment the securing strip in cross-section tapers in a direction away from the circumferential wall.

The securing strip may have an edge surface, having a normal with a directional component oriented away from the lower side of the box, as a result of which insertion is further enhanced. Furthermore the lowermost corner edge of the edge surface may be acute.

Aligning the box during its insertion in the hole and during later use, is enhanced when at least one further securing strip is present, which is at an angle to the centre line that is opposite the angle of the former securing strip. In a further development thereof several securing strips are present that are consecutive to each other in circumferential direction and alternately take up opposite angles to the centre line.

Securing in the hole can be enhanced when considered in the direction of the centre line at least one further securing strip is situated next to the former securing strip, and preferably extends at the same angle to the centre line. Said further securing strip and the former securing strip preferably coincide in projection on a transverse plane perpendicular to the centre line.

Each securing strip can be integrally formed with the circumferential wall of the box.

The aspects and measures described in this description and the claims of the application and/or shown in the drawings of this application may where possible also be used individually. Said individual aspects and other aspects may be the subject of divisional patent applications relating thereto. This particularly applies to the measures and aspects described per se in the sub claims.

### SHORT DESCRIPTION OF THE DRAWINGS

The invention will be elucidated on the basis of an exemplary embodiment shown in the attached drawings, in which:
Figure 1 shows a box according to the invention, shown sideways from above, as a distribution junction box;
Figure 2 shows the box of figure 1, in side view;
Figure 3 shows a cross-section of a part of the box of figures 1 and 2; and
Figures 4A and 4B show the box of figures 1, 2 and 3 in consecutive stages of installation.

### DETAILED DESCRIPTION OF THE DRAWINGS

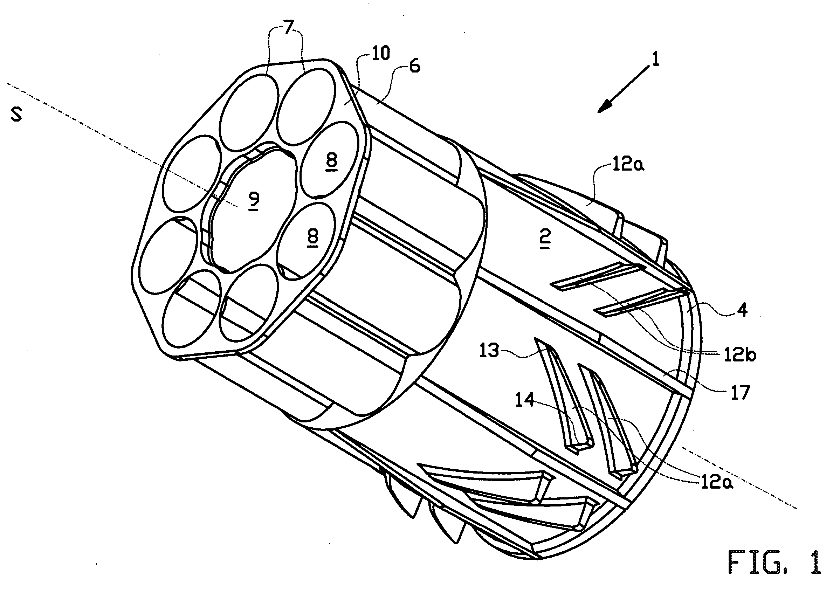

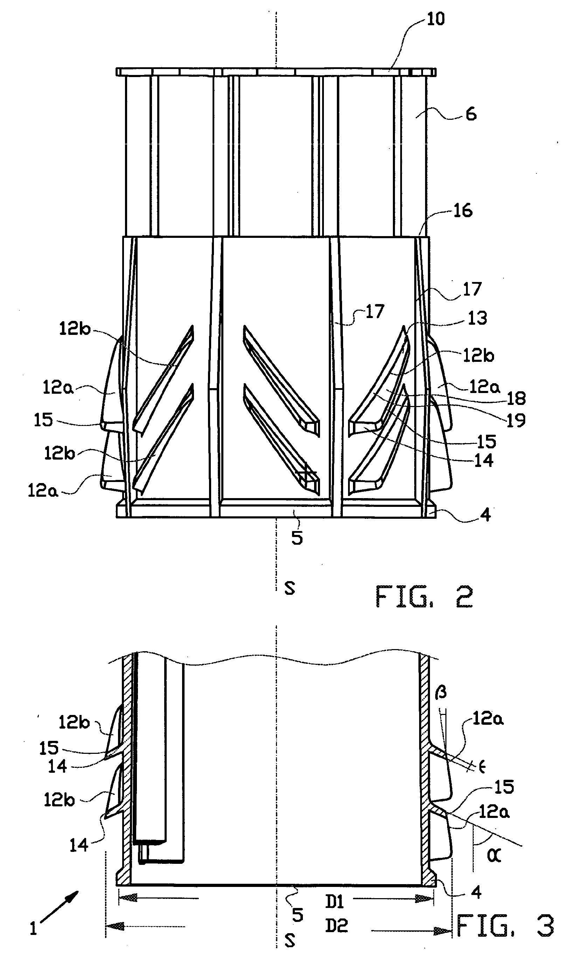

The distribution junction box 1 shown in figures 1 and 2 has been made by injection moulding a suitable synthetic material such as polypropene copolymer. The distribution junction box 1 is substantially cylindrical, having a centre line S, with a portion defined by a circumferential wall 2 having a circular cross-section, surrounding a cavity 3. At the bottom side, which becomes the mounting side, the circular end edge 4 surrounds an opening 5 to the cavity 3. At the opposite side a number of parallel spouts 6 have been formed that are perpendicular to the opening 5, wherein at the location of the transition between the spouts 6 and the circumferential wall 2 a transverse wall 16 has been formed. At the location of the spouts 6 the transverse wall 16 is open, so that the inner side of the spouts 6 is in open connection with the cavity 3. At the upper end facing away from the mounting side, the spouts form end edges 7 that define openings 8 and 9 and are part of end- or transverse wall 10. Within the cavity 3 a number of little bushes that are not further shown, have been integrally formed with nut members therein, for attachment of electric components in the distribution junction box.

Below the transverse wall 16 pairs of securing strips or ribs 1 2a,b have been integrally formed on the circumferential wall 2, wherein in each pair the ribs 12a,b are consecutive in the direction of the centre line S. As shown in figure 2 the ribs 12a,b comprise an elongated or strip-shaped body 18 and at the side of the circumferential wall 2 an elongated base 19 with which the elongated body 18 merges into the circumferential wall 2. In this example the elongated base 19 is widened with respect to the elongated body 18.

The ribs 12a,b have each been provided with an upper end 13 and a lower end 14, in between which the edge 15 extends. The height of the ribs 12a,b increases from the upper end towards the lower end. The diameter of the box 1 is defined by the circumscribed circle of the ribs 12a,b. As a result of the ribs 12a,b being designed so as to increase height downwardly, said diameter increases from the upper end 13 to the lower end 14 thereof, from D1 to D2.

It can be seen that the upper ends 13 and lower ends 14, respectively, of the upper lowermost ribs are situated straight above the ends 13, 14 in question of the uppermost ribs. As a result both ribs within a pair will coincide in a plane of projection perpendicular to the centre line S.

It furthermore strikes that in circumferential direction consecutive pairs of ribs are oriented oppositely, namely consecutive at an angle of 45° and at an angle of 135° to a plane of developing of the circumferential wall 2.

As shown in figure 3 the ribs 12a,b are in a plane of axial cross-section containing the centre line at an acute angle a to the circumferential wall 2 at that location, in this example 66 degrees. Also the edge 15 may form a surface which in the cross-section of figure 3 is at an angle ß to the centre line S, so that said surface has a normal having a small upward directional component. The ribs 12a,b may slightly taper (for instance 6 degrees) to the edge 15. The thickness t of the ribs 1 2a,b at the edge 15 may be 1-2 mm, for instance 1.4 mm. The ribs 12a,b then are slightly deformable out of their main plane.

The consecutive pairs of ribs are separated by longitudinal partitions 17 extending in axial and radial direction, which partitions also in downward direction have a slightly increasing height, and merge into the edge 4, where the partitions 17 define the same circumferential diameter as the edge 4.

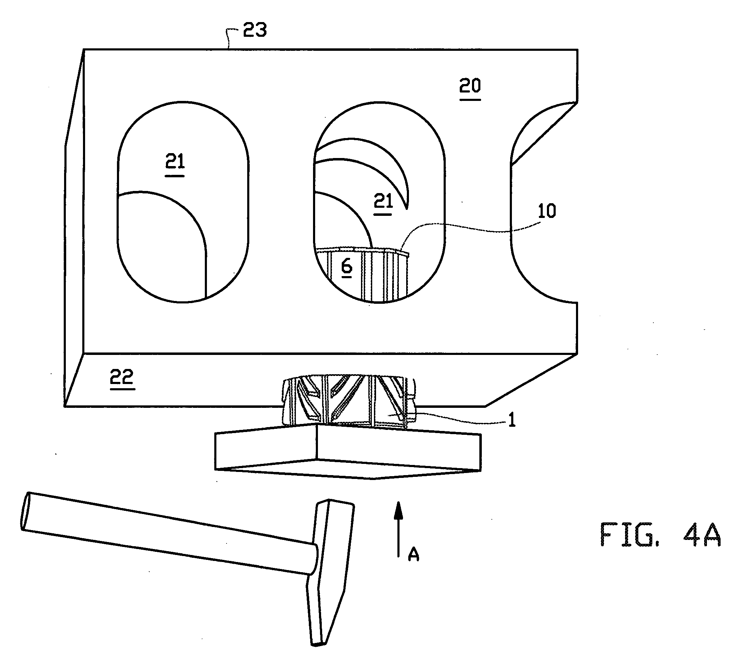

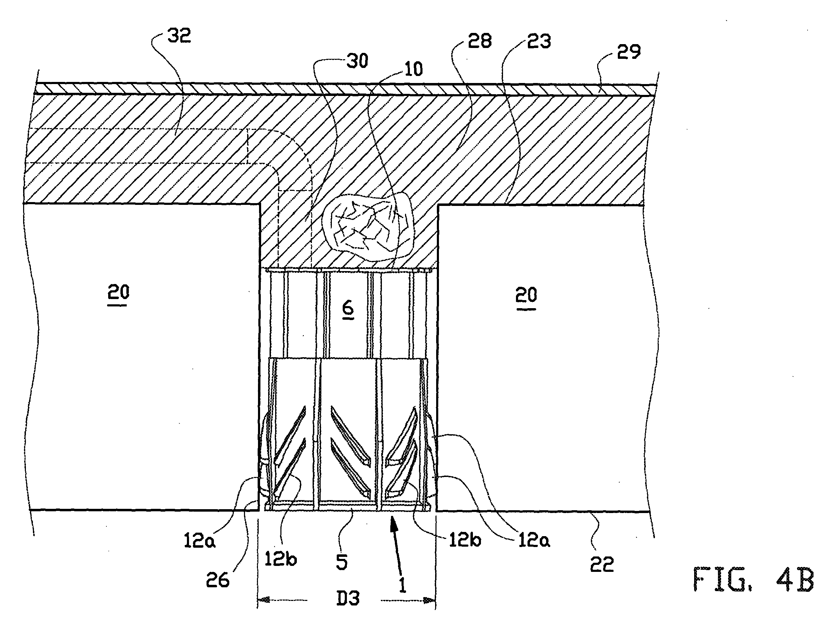

In figure 4A the moment is shown in which the box 1 is placed in a so-called (prefab) hollow core slab 20.

The hollow core slab 20 has been provided with hollow cores 21 in the known manner and has a bottom surface 22 and an upper surface 23, onto which later on a covering floor will be poured. After placing the hollow core slab 20 in the construction project at the wanted location, if so desired adapted to the latest wishes of the users of the building to be built, a diamond head drill or something similar is used to drill a continuous hole 26 (having a diameter D3, larger than D1, smaller than D2) in the hollow core slab 20.

The electrician slams the box 1 into the hole 26 from below, direction A, with the transverse wall 10 above. At some point the edges 15 of the ribs 12a,b touch the wall of the hole. Due to the gradually increasing shape of the ribs 1 2a,b the radial inward force exerted on the ribs 12a,b will gradually increase, and the ribs 12a,b will to an increasing degree be able to deform due to elastic bending out of their main plane. Thus it is achieved that the box 1 with the ribs 12a,b can be placed in the hole 26 smoothly and reliably so as to be clamp-fixed, until finally the edge 4 has come to be within the lower side of the hole 26, that means above the bottom surface 22. Due to the alternating inclined orientation of the ribs 12a and ribs 12b a rotation of the box 1 about its centre line S during insertion in the hole 26 is prevented.

Subsequently the electrician lays out installation pipes 32 on the upper surface 23 of the hollow core slab 20, and the bent ends 30 thereof are placed in the spouts 6 intended for that purpose. The electrician will then place some rock wool or something similar on the upper side of the box. After the installation activities on the rough hollow core slab 20 have been completed, covering layer 28 can be poured onto the floor, which layer embeds the installation pipes 32.

On the upper surface 29 of the covering layer 28 another layer can subsequently be applied, for instance in the form of floor covering.

The above description is included to illustrate the operation of preferred embodiments of the invention and not to limit the scope of the invention. Starting from the above explanation many variations that fall within the scope of the present invention will be evident to an expert.

## Claims

1. Box (1) for electric wirings, particularly a distribution junction box, having a circumferential wall (2) defining a cavity for electric connections that is provided with a centre line (S), having a lower opening giving access to the cavity, and at least one elongated securing strip (12a,12b) arranged on the circumferential wall and projecting outward therefrom, wherein the securing strip (12a,12b) at the side of the circumferential wall has an elongated base (19) with which the securing strip merges into the circumferential wall **characterized by** the elongated base (19) extending with a directional component in circumferential direction of the box and with a directional component in axial direction of the box.

2. Box according to claim 1, wherein the securing strip (12a,12b) is designed for elastic bending out of its main plane.

3. Box according to claim 1 or 2, wherein the securing strip (12a,12b) projects at an acute angle opening downward from the outer surface of the circumferential wall, considered in a plane of axial cross-section containing the centre line (S).

4. Box according to any one of the preceding claims, wherein the height of the securing strip (12a,12b) with respect to the outer surface of the circumferential wall varies in longitudinal direction of the securing strip.

5. Box according to claim 4, wherein the height of the securing strip (12a,12b) with respect to the outer surface gradually increases in longitudinal direction of the securing strip, preferably in a downward direction.

6. Box according to any one of the preceding claims, wherein the securing strip (12a, 12b) in cross-section tapers in a direction away from the circumferential wall.

7. Box according to any one of the preceding claims, wherein the securing strip (12a,12b) has an edge surface, having a normal with a directional component oriented away from the lower side of the box.

8. Box according to any one of the preceding claims, wherein at least one further securing strip (12a,12b) is present, which is at an angle to the centre line that is opposite the angle of the former securing strip.

9. Box according to claim 8, wherein several securing strips are present, that are consecutive to each other in circumferential direction and alternately take up opposite angles to the centre line (S).

10. Box according to any one of the preceding claims, wherein considered in the direction of the centre line at least one further securing strip is situated next to the former securing strip, and preferably extends at the same angle to the centre line (S).

11. Box according to claim 10, wherein the further securing strip and the former securing strip coincide in projection on a transverse plane perpendicular to the centre line (S)

12. Box according to any one of the preceding claims, wherein each securing strip (12a,12b) is integrally formed with the circumferential wall (2) of the box.

## Patentansprüche

1. Verkabelungsdose (1), insbesondere eine Verteileranschlussdose, mit einer Umfangswand (2), welche einen Hohlraum für elektrische Verbindungen festlegt, versehen mit einer Mittellinie (S), einer unteren Öffnung, die einen Zugang zu dem Hohlraum bildet, und mindestens einem verlängerten Sicherheitsstreifen (12a, 12b), der an der Umfangswand angeordnet ist und von dieser nach außen hervorsteht, wobei der Sicherungsstreifen (12a, 12b) an der Seite der Umfangswand einen verlängerten Sockel (19) aufweist, über welchen der Sicherungsstreifen in die Umfangswand übergeht, **dadurch gekennzeichnet, dass** sich der verlängerte Sockel (19) mit einer Richtungskomponente in Umfangsrichtung der Verkabelungsdose und mit einer Richtungskomponente in Axialrichtung der Verkabelungsdose erstreckt.

2. Verkabelungsdose nach Anspruch 1, wobei der Sicherungsstreifen (12a, 12b) für ein elastisches Verbiegen aus seiner Hauptebene ausgelegt ist.

3. Verkabelungsdose nach Anspruch 1 oder 2, wobei der Sicherungsstreifen (12a, 12b) gesehen in einer Ebene eines die Mittellinie (S) enthaltenden axialen Querschnitts in einem spitzen Winkel hervorsteht und sich nach unten von der äußeren Oberfläche der Umfangswand her öffnet.

4. Verkabelungsdose nach einem der vorhergehenden Ansprüche, wobei sich die Höhe des Sicherungsstreifens (12a, 12b) in Bezug auf die äußere Oberfläche der Umfangswand in Längsrichtung des Sicherungsstreifens ändert.

5. Verkabelungsdose nach Anspruch 4, wobei sich die Höhe des Sicherungsstreifens (12a, 12b) in Bezug auf die äußere Oberfläche der Umfangswand in Längsrichtung des Sicherungsstreifens stufenweise fortschreitend vergrößert, vorzugsweise in einer Abwärtsrichtung.

6. Verkabelungsdose nach einem der vorhergehenden Ansprüche, wobei sich der Sicherungsstreifen (12a, 12b) in einer Richtung von der Umfangswand hinweg verjüngt.

7. Verkabelungsdose nach einem der vorhergehenden Ansprüche, wobei der Sicherungsstreifen (12a, 12b) eine Kantenoberfläche mit einer Normalen mit einer Richtungskomponente, die von der unteren Seite der Verkabelungsdose hinweg orientiert ist, aufweist.

8. Verkabelungsdose nach einem der vorhergehenden Ansprüche, wobei mindestens ein weiterer Sicherungsstreifen (12a, 12b) vorhanden ist, welcher in einem Winkel zu der Mittellinie steht, der dem Winkel des vorhergehenden Sicherungsstreifens entgegengesetzt ist.

9. Verkabelungsdose nach Anspruch 8, wobei mehrere Sicherungsstreifen vorhanden sind, die in Umfangsrichtung aufeinander folgen und abwechselnd entgegengesetzte Winkel zu der Mittellinie (S) annehmen.

10. Verkabelungsdose nach einem der vorhergehenden Ansprüche, wobei gesehen in der Richtung der Mittellinie mindestens ein weiterer Sicherungsstreifen neben dem vorhergehenden Sicherungsstreifen angeordnet ist, und sich vorzugsweise in dem gleichen Winkel zu der Mittellinie (S) erstreckt.

11. Verkabelungsdose nach Anspruch 10, wobei sich der weitere Sicherungsstreifen und der vorhergehende Sicherungsstreifen in Projektion auf einer transversalen Ebene rechtwinklig zu der Mittellinie (S) decken.

12. Verkabelungsdose nach einem der vorhergehenden Ansprüche, wobei jeder Sicherungsstreifen (12a, 12b) einstückig mit der Umfangswand (2) geformt ist.

## Revendications

1. Boîte (1) destinée au câblage électrique, en particulier, une boîte de raccordements de distribution, comportant une paroi périphérique (2) définissant une cavité pour des raccordements électriques, ayant une ligne centrale (S), comportant une ouverture inférieure donnant accès à la cavité, et au moins une lamelle de fixation allongée (12a, 12b) agencée sur la paroi périphérique et faisant saillie à partir de celle-ci, la lamelle de fixation (12a, 12b) ayant du côté de la paroi périphérique une base allongée (19) avec laquelle la lamelle de fixation fusionne avec la paroi périphérique, **caractérisé en ce que** la base allongée (19) s'étend avec une composante de direction dans la direction périphérique de la boîte et avec une composante de direction dans la direction axiale de la boîte.

2. Boîte selon la revendication 1, dans laquelle la lamelle de fixation (12a, 12b) est conçue pour se courber de façon élastique hors de son plan principal.

3. Boîte selon la revendication 1 ou 2, dans lequel la lamelle de fixation (12a, 12b) fait saillie avec un angle aigu ouvrant vers le bas à partir de la surface extérieure de la paroi périphérique, considérée dans un plan de section axiale contenant la ligne centrale (S).

4. Boîte selon l'une quelconque des revendications précédentes, dans laquelle la hauteur de la lamelle de fixation (12a, 12b) par rapport à la surface extérieure de la paroi périphérique varie dans la direction longitudinale de la lamelle de fixation.

5. Boîte selon la revendication 4, dans laquelle la hauteur de la lamelle de fixation (12a, 12b) par rapport à la surface extérieure augmente graduellement dans la direction longitudinale de la lamelle de fixation, de préférence dans une direction orientée vers le bas.

6. Boîte selon l'une quelconque des revendications précédentes, dans laquelle la lamelle de fixation (12a, 12b) à une section qui diminue dans une direction s'éloignant de la paroi périphérique.

7. Boîte selon l'une quelconque des revendications précédentes, dans laquelle la lamelle de fixation (12a, 12b) a une surface de bord ayant une normale ayant une composante de direction s'éloignant du côté inférieur de la boîte.

8. Boîte selon l'une quelconque des revendications précédentes, dans laquelle se trouve au moins une autre lamelle de fixation (12a, 12b), qui fait un angle par rapport à la ligne centrale qui est opposé à l'angle de la lamelle de fixation précédente.

9. Boîte selon la revendication 8, dans laquelle plusieurs lamelles de fixation sont présentes, sont consécutives dans une direction périphérique et présentent alternativement des angles opposées par rapport à la ligne centrale (S).

10. Boîte selon l'une quelconque des revendications précédentes, dans laquelle, considérée dans la direction de la ligne centrale, au moins une autre lamelle de fixation est située à côté de la lamelle de fixation précédente, et s'étend en faisant de préférence le même angle par rapport à la ligne centrale (S).

11. Boîte selon la revendication 10, dans laquelle l'autre lamelle de fixation et la lamelle de fixation précédente coïncident en projection sur un plan transversal perpendiculaire à la ligne centrale (S).

12. Boîte selon l'une quelconque des revendications précédentes, dans laquelle chaque lamelle de fixation (12a, 12b) est formée d'une seule pièce avec la paroi périphérique (12) de la boîte.
